# EUROPEAN PATENT APPLICATION

(11) **EP 4 707 964 A1**
(43) Date of publication of application: **11.03.2026**
(21) Application number: 25200093.0
(22) Date of filing: 04.09.2025
(51) Int. Cl.: G05B 17/02, G05B 23/02, G06N 3/0475

(54) **METHOD FOR PROCESS OPTIMIZATION USING GENERATIVE AI**

(30) Priority: 05.09.2024 KR 20240120558
(71) Applicant: CJ Olivenetworks Co., Ltd., Seoul 04323 (KR)
(72) Inventor: LEE, Tae Hee, 04323 Seoul (KR); KWAK, Do Yeon, 04323 Seoul (KR); CHOI, Yun Jong, 04323 Seoul (KR); YONG, Si Wook, 04323 Seoul (KR); STRITAR, Laura Suh Young, 04323 Seoul (KR); JIN, Hyun Woo, 04323 Seoul (KR); YOUN, Sun Bum, 04323 Seoul (KR)
(74) Representative: BCKIP Part mbB

(57) **Abstract**

The present disclosure relates to a method and system for process optimization using generative AI, and more particularly, to a method and system for process optimization that allows the exploration or inference of causalities between multiple steps and variables involved in an arbitrary process through an artificial intelligence algorithm, and the derivation of hypotheses based thereon, and the simulation and verification thereof.

## Description

### BACKGROUND OF THE INVENTION

### Field of the Invention

The present disclosure relates to a method and system for process optimization using generative AI, and more particularly, to a method and system for process optimization that allows the exploration or inference of causalities between multiple steps and variables involved in an arbitrary process through an artificial intelligence algorithm, and the derivation of hypotheses based thereon, and the simulation and verification thereof.

### Background of the Related Art

In general, a process of producing a product is complex and involves a variety of steps, and is characterized by the interaction of a large number of variables in this phase. Therefore, despite the demand to optimize the process, efficient optimization is almost impossible with traditional methods due to the complexity of the process.

Meanwhile, recent advances in deep learning technology have shown excellent performance in learning and predicting complex patterns based on large amounts of data. In particular, generative AI shows sufficient applicability in the field of process optimization through its ability to generate new data or transform existing data.

The present disclosure has been proposed by focusing on the demand for process optimization and the usability of generative AI algorithms, and aims to improve a process optimization phase that has conventional technical limitations by utilizing an artificial intelligence algorithm capable of causality exploration and causality inference throughout the process.

In addition, the disclosure to be described through the detailed description has been invented not only to solve the technical problems mentioned above, but also to provide additional technical elements that cannot be easily invented by those skilled in the art.

### CITATION LIST

### Patent Literature

(Patent Document 1) Korean Patent Publication No. 10-2023-0089693 (June 21, 2023)

### SUMMARY OF THE INVENTION

The present disclosure aims to analyze a causality between variables in a complex production process so as to allow efficient derivation of key factors for process optimization.

Furthermore, the present disclosure aims to generate various process improvement hypotheses supported by logical grounds, and to implement an environment that can systematically verify them.

In addition, the present disclosure aims to increase user convenience by providing an environment in which hypotheses derived through causality inference can be simulated and even the expected effects can be known before applying them to an actual process.

Moreover, the present disclosure aims to allow a user to intuitively understand analysis results and hypotheses through a user-friendly interface, thereby allowing the user to make decisions easily.

In order to solve the foregoing problems, a method of performing process optimization by a process optimization system including a central processing unit and a memory according to the present disclosure may include (a) a process data receiving step of receiving a plurality of process data; (b) a causality derivation step of to deriving a causality between variables by analyzing the process data; (c) a causality inference step of calculating a strength of a causality between the variables by referring to the derived causality; (d) a simulation step of performing a simulation that changes a condition of a specific variable by referring to a causality inference result calculated in the causality inference step; and (e) a hypothesis generation step of generating at least one hypothesis for process optimization by referring to a simulation result calculated in the simulation step.

Furthermore, in the method of performing process optimization, the causality derivation step may include exploring the process data to identify characteristics or patterns of the process data; deriving a correlation between arbitrary variables included in the process data; selecting a key variable among the arbitrary variables; and deriving a causality between variables based on the key variable.

Furthermore, in the method of performing process optimization, the causality derivation step may further include inputting a causality derivation result generated by executing the causality derivation step into a generative AI support system; and receiving AI interpretation data corresponding to the causality derivation result generated by the generative AI support system.

Furthermore, in the method of performing process optimization, the causality derivation step may further include analyzing the received process data and the AI interpretation data to re-derive a causality between the variables.

Furthermore, in the method of performing process optimization, the AI interpretation data may include a causality explanation generated by referring to the contents of previously stored literature and a source regarding the literature.

Furthermore, in the method of performing process optimization, the causality derivation step may derive the causality by further inputting at least one experimental data or prior knowledge data in addition to the process data.

Furthermore, in the method of performing process optimization, the exploring of the process data may explore by linking a final indicator targeted by process optimization with an arbitrary variable among the process data.

Furthermore, in the method of performing process optimization, the causality inference step may include inputting a causality inference result generated by executing the causality inference step into a generative AI support system; and receiving AI interpretation data corresponding to the causality inference result generated by the generative AI support system.

Furthermore, in the method of performing process optimization, the causality inference step may further include analyzing the received causality derivation result and the AI interpretation data to recalculate a strength between the causalities.

Furthermore, in the method of performing process optimization, the simulation step may perform a simulation by referring to a causality and a causality strength between specific variables included in the causality inference result, and also referring to simulation condition information arbitrarily generated by the process optimization system or input by an arbitrary user.

Furthermore, in the method of performing process optimization, the hypothesis generation step may generate a hypothesis including a specific causality and an effect according to the causality by referring to the simulation result, and determine whether the hypothesis includes a previously known causality by retrieving a literature DB.

Furthermore, in the method of performing process optimization, the hypothesis generation step may include inputting at least one hypothesis generated by executing the hypothesis generation step into a generative AI support system; and receiving AI interpretation data corresponding to the hypothesis generated by the generative AI support system.

Meanwhile, a method of performing process optimization by a process optimization system including a central processing unit and a memory according to another embodiment of the present disclosure may include (a) a process data receiving step of receiving a plurality of process data; (b) a causality derivation step of to deriving a causality between variables by analyzing the process data; (c) a causality inference step of calculating a strength of a causality between the variables by referring to the derived causality; (d) a hypothesis generation step of generating at least one hypothesis for process optimization by referring to a causality inference result produced in the causality inference step; and (e) a simulation step of performing a simulation that changes a condition of a specific variable by referring to information on the hypothesis.

Furthermore, in the method of performing process optimization, the method may further include selecting, when a plurality of hypotheses are generated in the hypothesis generation step, hypotheses requiring a simulation subsequent to the hypothesis generation step, wherein the simulation step performs a simulation only for the selected hypotheses.

Meanwhile, in a process optimization system including a central processing unit and a memory according to still another embodiment of the present disclosure, the central processing unit may execute instructions for executing a process optimization method stored in the memory, wherein a method of executing the process optimization method includes (a) a process data receiving step of receiving a plurality of process data; (b) a causality derivation step of to deriving a causality between variables by analyzing the process data; (c) a causality inference step of calculating a strength of a causality between the variables by referring to the derived causality; (d) a simulation step of performing a simulation that changes a condition of a specific variable by referring to a causality inference result calculated in the causality inference step; and (e) a hypothesis generation step of generating at least one hypothesis for process optimization by referring to a simulation result calculated in the simulation step.

In addition, a process optimization system including a central processing unit and a memory according to yet still another embodiment of the present disclosure, the central processing unit may execute instructions for executing a process optimization method stored in the memory, wherein a method of executing the process optimization method includes (a) a process data receiving step of receiving a plurality of process data; (b) a causality derivation step of to deriving a causality between variables by analyzing the process data; (c) a causality inference step of calculating a strength of a causality between the variables by referring to the derived causality; (d) a hypothesis generation step of generating at least one hypothesis for process optimization by referring to a causality inference result produced in the causality inference step; and (e) a simulation step of performing a simulation to change a condition of a specific variable by referring to information on the hypothesis.

According to the present disclosure, optimal process conditions derived through causality analysis and generative AI may be applied, thereby having an effect of increasing process efficiency and improving product quality.

Furthermore, according to the present disclosure, there is an effect of reducing a number of actual experiments through simulation and verification, and preventing unnecessary waste of resources.

In addition, according to the present disclosure, new process improvement variables or hypotheses that have not been previously proposed may be subject to review, thereby having an effect of allowing innovative process improvement.

Moreover, according to the present disclosure, information items that allow a user to intuitively understand the matters necessary for process improvement and the basis therefor may be provided, thereby having an effect of helping the user easily make decisions.

Besides, according to the present disclosure, phases such as reflecting prior knowledge, deriving causalities, and explaining support by generative AI may be repeatedly performed, thereby having an effect of securing knowledge or information throughout an entire process in various forms of data.

### BRIEF DESCRIPTION OF THE DRAWINGS

FIG. 1 shows a diagram for conceptually and easily understanding a process optimization system according to the present disclosure.
FIG. 2 shows detailed components of a generative AI support system.
FIG. 3 shows a process optimization method according to a first embodiment.
FIG. 4 shows a graph of a result of deriving causalities, and FIG. 5 shows a graph of a result of calculating a strength of each causality among the explored causalities and inferring the causalities as a result thereof.
FIG. 6 shows a process optimization method according to a second embodiment.

### DETAILED DESCRIPTION OF THE PREFERRED EMBODIMENT

The details of the objectives and technical configurations of the present disclosure and operational effects thereof will be more clearly understood from the following detailed description based on the accompanying drawings appended hereto. Hereinafter, embodiments according to the present disclosure will be described in detail with reference to the accompanying drawings.

Embodiments disclosed herein should not be interpreted as limiting or used to limit the scope of the present disclosure. It is apparent for those skilled in the art that a description including embodiments herein has various applications. Therefore, any embodiments described in the detailed description of the present disclosure are illustrative for better understanding of the present disclosure and are not intended to limit the scope of the present disclosure to the embodiments.

Functional blocks illustrated in the drawings and described hereunder are only examples of possible implementations. In other implementations, other functional blocks may be used without departing from the concept and scope of the detailed description. Furthermore, one or more functional blocks of the present disclosure are illustrated as separate blocks, but one or more of the functional blocks of the present disclosure may be a combination of various hardware and software elements that execute the same function.

In addition, an expression that some elements are "included" is an expression of an "open type", and the expression simply denotes that the corresponding elements are present, but should not be construed as excluding additional elements.

Moreover, in case where it is mentioned that one element is "connected" or "coupled" to the other element, it should be understood that one element may be directly connected to the other element, but another element may be present therebetween.

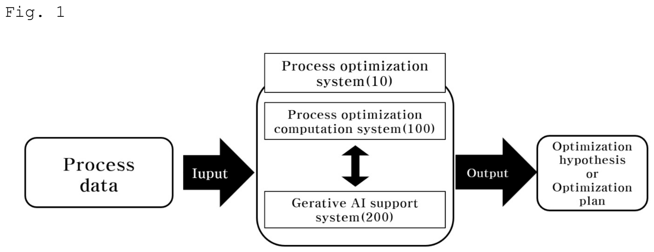

FIG. 1 shows a diagram for conceptually understanding a process optimization system according to the present disclosure. Referring to the drawing, the present disclosure may execute, when process data, for example, detailed steps included in a process and a plurality of variables that can be obtained for each process, are input into the process optimization system 10, a causality analysis between variables and a simulation based on the corresponding process data so as to provide at least one hypothesis for optimizing the process. In addition, generative AI may be actively utilized in such a process optimization phase, and the generative AI may refer to literature data related to a process in the overall phase of process optimization computations, such as deriving a causality between variables within the corresponding process, inferring a causality, and expecting a simulation result, to provide a user with visualized information such as on what basis the causality is derived or inferred, what simulation result is expected, or the like, thereby allowing the user to easily understand variables required for process optimization and a degree of adjustment thereof.

When referring to the drawing, it can be seen that the process optimization system 10 is designed to include two subordinate systems, that is, a process optimization computation system 100, and a generative AI support system 200. Among them, the process optimization computation system 100 may be implemented to analyze a causality between variables based on process data and generate hypotheses therefrom, and the generative AI support system 200 may be implemented to provide necessary information for each optimization computation step in conjunction with the process optimization computation system 100. Meanwhile, in this detailed description, in order to help understand the disclosure, the process optimization system 10 is divided into two subordinate systems and explained using a drawing method as shown in the drawing, but it is to be understood that the process optimization system 10 can be configured with more subordinate systems as needed, or can be implemented as a single system.

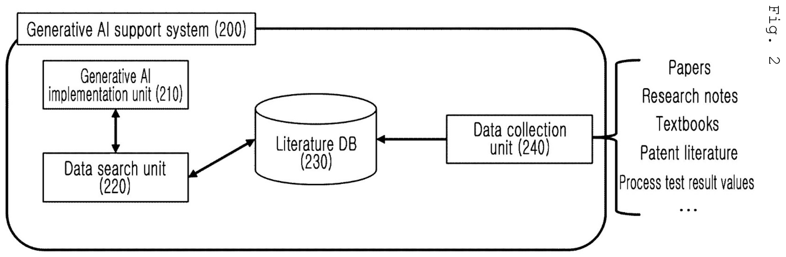

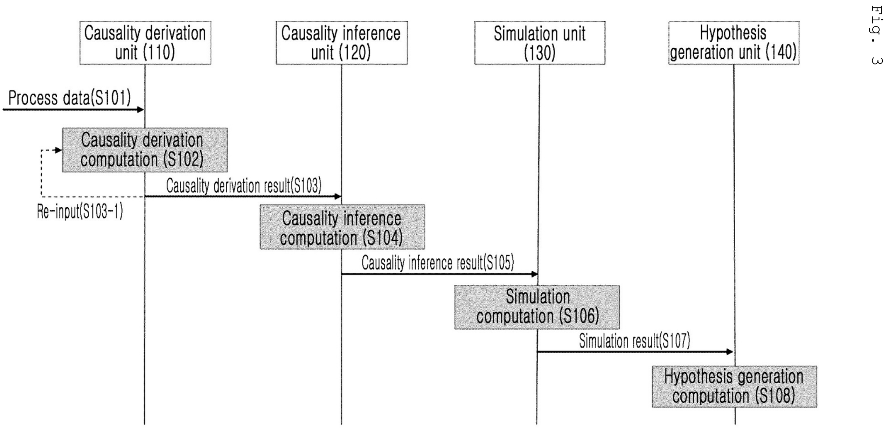

The process optimization computation system 100 may include a causality derivation unit 110, a causality inference unit 120, a simulation unit 130, and a hypothesis generation unit 140, the generative AI support system 200 may include a generative AI implementation unit 210, a data search unit 220, a literature DB 230, and a data collection unit 240, and these detailed components will be described later in the descriptions of FIG. 3 and FIG. 2, respectively.

Meanwhile, by utilizing the process optimization system 10 according to the present disclosure, optimization of various processes may be allowed, and one example is a process of producing bio-products. Specifically, a process of producing amino acids or nucleic acids includes phases of cultivating and fermenting various microorganisms in an optimal environment, and during these phases, process data including various types of variables such as pH, temperature, pressure, air flow, and culture medium components are managed. Among them, in particular, the fermentation phase may be divided into jar, seed, and main steps depending on a degree of microbial growth, and each step has different compositional environment and variables that can be measured and controlled accordingly. In addition, in each step, various variables such as an environmental variable such as temperature, pH, and optical density (OD), an input culture medium such as glucose, salt, and raw sugar, which are nutrient sources for microorganisms, input timing, adjustment timing, and frequency of the culture medium and environmental factor may be measured or controlled. These variables may be measured by measuring means installed in process equipment, or may be directly input into a terminal by a process manager (operator) to be stored as data. A measurement indicator to be optimized in a process including such complex steps and variables may include a production efficiency, a production volume, a time period required for production of a material finally produced, and furthermore, a growth time and production volume measured in each step included in the process may also be included in the indicator to be optimized.

Meanwhile, in an environment where a causality between variables is very complexly intertwined as described above and it is impossible for a user to identify all causalities between variables within a process, the process optimization system according to the present disclosure may receive variables monitored in a product production phase as an input to analyze which variables have a causality and how strong the causality is, and provide the user with at least one hypothesis for optimizing an amino acid production process based on the result. As a more specific example, a causality may be derived that when a pH is adjusted in a microbial culture step, a growth rate of microorganisms may increase, and accordingly, the production of amino acids may increase, and it may also be quantitatively predicted how much the production of amino acids increases when the pH is adjusted to some extent.

On the other hand, in a process optimization method according to the present disclosure, it has been mentioned that generative AI can be actively utilized, and in the steps of causality analysis and hypothesis generation as described above, the generative AI may be implemented to present to the user what basis supports the derivation and inference of the causality by referring to literature data, thereby allowing the user to directly identify variables that need to be adjusted in process optimization, or supporting the user (operator) to obtain inspiration through more advanced human thinking by referring to various hypotheses suggested by the generative AI.

FIG. 2 shows detailed components of the generative AI support system 200, and referring to the drawing, the generative AI support system 200 may include a generative AI implementation unit 210, a data search unit 220, a literature DB 230, and a data collection unit 240.

The generative AI implementation unit 210 is configured to allow generative AI to operate in at least some of steps included in process optimization, and the generative AI implementation unit 210 may be designed, when arbitrary data is input, to generate a vector for the corresponding data, perform a necessary vector-based computation, and then generate the result as text. In the generative AI implementation unit 210, a pre-trained large language model (PLLM) or a model that generates a response by utilizing external reference data by applying a RAG structure to process text data may be utilized.

The generative AI implementation unit 210 may be designed to receive an input in each step of process optimization, and in this case, the input may be a prompt arbitrarily entered by a user or a prompt automatically entered by the process optimization computation system 100. The contents of the prompt may vary in part depending on each step of process optimization, but may preferably include a result value derived from the corresponding step and/or a result value derived from a step prior to the corresponding step, and may include a request for a literature-based explanation (a causality, a validity, a counterargument, an additional variable to be considered, or an expected effect that can be derived from the result value) based on the result value. Additionally, the generative AI may provide an accurate answer by allowing the prompt to include expertise literature (or such expertise literature converted into a vector form) that can be referenced by the generative AI to output literature-based explanations. On the other hand, the prompt may only include information generated by the generative AI itself. That is, even when there is no result value derived from a specific step or no result derived from a step prior to the specific step, only information generated by generative AI may be included in the prompt, thereby inducing an innovative answer from the generative AI.

The data search unit 220 performs a function of efficiently exploring information that matches the entered query through generative AI. The data search unit 220 may be directly connected to the literature DB 230 to access necessary literature data, and may help the generative AI generate an appropriate answer by exploring and acquiring literature data corresponding to the prompt entered in each step of the optimization process. To this end, the data search unit 220 may be provided with a function of vectorizing text data, a function of vectorizing a request (query) included in a prompt, and a function of exploring data having a similar vector representation from a vectorstore.

The literature DB 230, which is a configuration that stores and manages expertise literature related to a process, is a configuration that plays an important role in supporting the generation AI, in particular, to produce an accurate analysis result in a process optimization phase. For reference, literature refers to books, documents, and the like written in text and including explanations of arbitrary facts, and such literatures may be digitally converted and stored in the literature DB 230. Research papers, technical reports, research notes, textbooks, and the like related to a process may be stored in the literature DB 230, and literatures stored in the literature DB 230 may exist in various forms, such as being a digital document in itself, being digitally converted from its original text, being converted into text data through text recognition technology, or being converted into a vector form by a language model. For reference, a hypothesis in which the validity of a causality or correlation is verified above a certain level by the process optimization system according to the present disclosure may be stored in the literature DB 230. Specifically, when it is verified that a specific condition produced by the process optimization system according to the present disclosure has a significant effect on a final product as a result of a test (simulation), a hypothesis regarding the corresponding condition may be stored in the literature DB 230 so as to be utilized as prior knowledge in a subsequent process optimization phase.

Lastly, the data collection unit 240 performs a function of continuously searching for expertise literature from the outside and storing it in the literature DB 230 when a new expertise literature is searched. The data collection unit 240 may be implemented to identify the existence of new expertise literature related to a process by periodically searching for a keyword, and furthermore, the data collection unit 240 may be implemented, when such expertise literature is discovered, to provide related information such as at least some of the contents of the literature, a source of the literature, and an author of the literature so as to allow the user to determine the validity and reliability of the corresponding literature.

In the above, a process optimization system and a method thereof have been conceptually examined with reference to FIGS. 1 and 2,

Before providing the full description, a hardware implementation means of the process optimization system 10 will be briefly described. It is understood that a process optimization method according to the present disclosure can be executed by the process optimization system 10 or an computation device having a central processing unit and a memory. The type of such a system or computation device may include both a portable terminal such as a smartphone, a PDA, a tablet PC, and a terminal fixedly disposed at a predetermined position, such as a desktop PC. The central processing unit may also be referred to as a controller, a microcontroller, a microprocessor, a microcomputer, or the like. Furthermore, the central processing unit may be implemented by hardware or firmware, software, or a combination thereof, and configured to include an application specific integrated circuit (ASIC) or a digital signal processor (DSP), a digital signal processing device (DSPD), a programmable logic device (PLD), or a field programmable gate array (FPGA) when implemented using hardware, and configured with firmware or software to include a module, a procedure, a function or the like that performs the foregoing functions or operations when implemented using firmware or software. In addition, the memory may be implemented as Read Only Memory (ROM), Random Access Memory (RAM), Erasable Programmable Read Only Memory (EPROM), Electrically Erasable Programmable Read-Only Memory (EEPROM), flash memory, Static RAM (SRAM), a hard disk drive (HDD), a solid state drive (SSD) or the like.

In some cases, the system 10 may be a server, and in this case, the server may be a device that stores and executes a program, that is, a set of instructions, for actually implementing a process optimization method according to the present disclosure. The type of the server may be at least one server PC managed by a specific user or may be a type of cloud server provided by another company, that is, a type of cloud server that the user can sign up to use.

Additionally, in some cases, a process optimization method according to the present disclosure may be executed not on a single system 10 but on a cluster system consisting of a plurality of systems or computation devices. Within the cluster system, a plurality of computation devices required to execute the process optimization method may be respectively set to perform different computations.

Hereinafter, each step of process optimization methods will be described with reference to the drawings.

FIG. 3 shows each step of a process optimization method according to the first embodiment of the present disclosure. Referring to the drawing, it can be seen that the process optimization method can be executed by detailed components of the process optimization computation system 100, that is, a causality derivation unit 110, a causality inference unit 120, a simulation unit 130, and a hypothesis generation unit 140, and in this case, each detailed component can be implemented as an algorithm module implemented by a set of instructions.

The process optimization method according to a first embodiment may first include receiving, by the causality derivation unit 110, process data (S101). The causality derivation unit 110 may receive process data by directly communicating with a means of monitoring a process system (not shown) (including all means capable of measuring or monitoring process situations, such as sensors and CCTVs), or an operator's terminal (e.g., a smartphone, a portable device dedicated to process data, etc.) that inputs various process data at a place (factory) where a process is being performed, or may be designed to receive process data from a process data DB in which process data items are stored.

The type of process data may include various things, such as temperature (temperature at each process step, temperature by culture tank, etc.), pH, pressure (pressure of a culture tank, pressure of a pipeline for transporting culture medium/microorganisms, etc.), air flow rate, dissolved oxygen, carbon dioxide concentration, sampling amount, culture medium type, culture medium component, culture medium amount, culture medium mixing ratio, culture medium addition amount, culture medium addition time, culture medium replacement cycle, measurable microbial density during a culture phase, energy consumption required to operate a process, type and amount of waste generated by a process, temperature and humidity inside a factory, and the like. Additionally, as mentioned, information on a process itself, as well as information on operators within a factory or work information on operators, may also be included as a type of process data. That is, process data may all include information on materials used in a process, information measured in a phase of the process, information on a location where the process takes place, and information on personnel (operators) participating in the process, and necessary information items of them may be selected and utilized to derive or infer causalities later.

Meanwhile, data preprocessing may be performed on the process data before and after step S101, for example, data with missing above a reference value may be excluded, data set as unnecessary data according to the user's setting may be excluded, and data that deviates from a preset normal range may be excluded. Moreover, data supplementation processing may also be performed for missing values using known methods such as mean, median, and KNN. The data preprocessing may have already been performed prior to the process data being transmitted to the causality derivation unit 110, or may be performed by the causality derivation unit 110, or may be performed by another preprocessing unit (not shown) that can be included in the process optimization system 10.

Subsequent to receiving process data and performing data preprocessing, the causality derivation unit 110 may perform a computation for deriving causalities between specific variables throughout the process from the process data (S102). This step may include a phase of exploring data, a phase of deriving a correlation between variables, a phase of deriving a key variable, and a phase of deriving a causality between specific variables.

A main objective of the phase of exploring data is to analyze previously collected various process data so as to identify the characteristics or patterns of the process data, and furthermore, another objective thereof may also identify a problem that can be discovered from the identified characteristics or patterns. In this data exploration phase, process data may be linked and analyzed together with a target final indicator (e.g., productivity), thereby exploring variables affecting the target indicator from a first phase of deriving a causality. Additionally, in the data exploration phase, statistical computations, algorithms for discovering patterns or rules in data that appear repeatedly, and algorithms for clustering may be utilized to analyze the characteristics or patterns of data. On still another hand, in the data exploration phase, an interface may be implemented so as to provide a user with characteristics, patterns, or problems of process data by utilizing means (graphs, scatter diagrams, etc.) that visually express the distributions, trends, and outliers of data, and through this, an environment may be provided that allows the user to intuitively understand a relationship between variables (a relationship between variables measured within different steps, or variables measured within the same step) or to predict a problem within a process.

Following the data exploration phase, a phase of deriving a correlation between variables may be performed. Previously, if it has been a phase of analyzing the characteristics or patterns of process data, this phase may quantitatively identify whether one variable affects the other variable(s) (presence or absence of a correlation) and a degree to which it affects (a strength of a correlation).

In the correlation derivation phase, the presence or absence and strength of a correlation may be identified through a correlation and regression analysis between a target indicator and a specific variable. The correlation analysis is used to identify a correlation between multiple variables by utilizing a matrix or heatmap, and a result of analyzing the correlation may be used to identify whether there is an influence between process variables and a strength of the influence, and furthermore, a phase that can be visually output to the user may be added so as to allow the user to have an intuitive understanding. The regression analysis is intended to functionalize a relationship between one particular variable and the other variable(s) and to predict an effect of the corresponding particular variable on the other variable(s) by reflecting a trend revealed by the functionalization. A result of the regression analysis may also be used to identify whether there is an influence between process variables and a strength of the influence.

Meanwhile, subsequent to the correlation derivation phase, a phase of deriving key variables may be performed. In this phase, specific variables or variables analyzed to have a significant effect on a process may be selected. This phase may include predicting a target indicator by utilizing a machine learning model based on a result of previously analyzing process data, and identifying which variables contribute to the target indicator to selecting key variables. Additionally, this phase may include embedding variables and utilizing the embedding of a target indicator and other variables to select variables that have a significant influence on one another.

Subsequent to deriving key variables, a phase of deriving a causality between the variables within a process may be performed. This is a core computation performed in the causality derivation unit 110, which may be understood as defining a causality in which a variable affects another variable within an actual process based on a relationship between variables identified in a previous data exploration and correlation derivation step. In this detailed description, the terms correlation and causality are used separately, and when a correlation refers to a tendency of data obtained by quantitatively identifying an association between variables, a causality refers to a relationship in which one variable causes a change in another variable, and the causality can be defined only when various mechanisms within a process are reflected in addition to a result of analyzing a correlation between variables.

The causality derivation unit 110 may be implemented to discover a causality between variables within a process by utilizing a causality derivation algorithm (or model), and in this case, previously analyzed process data may be input as an input, and additionally, experimental data, that is, experimental data performed separately from the process and whose phase is recorded, may be further input. The input of experimental data is intended to reflect an influence between variables in a process step that cannot be identified from simple quantitative analysis by allowing a causality derivation algorithm to refer to not only data acquired during a process but also data in a strictly controlled experimental environment. The experimental data may be provided from a literature DB, which will be mentioned in the latter part of this detailed description, that is, a type of database that stores various types of reference literatures, and the experimental data may be continuously updated as various experiments are performed.

Meanwhile, data that can be input into a causality derivation algorithm may also include prior knowledge data. For example, prior knowledge that a concentration or amount of phosphoric acid affects a time period required for fermentation, prior knowledge that a type or concentration of minerals affects the productivity of a final product, and prior knowledge that a concentration of sugar affects a fermentation yield may be input into the causality derivation algorithm so as to allow the prior knowledge to be reflected when deriving a causality. The input of such prior knowledge data may be directly input by the user through an input interface provided to the user, or may be implemented to be input by retrieving prior knowledge data (literature data) previously stored in a literature DB. When the prior knowledge data is input, the reliability or probability of the corresponding prior knowledge data may be input together, and for example, a value of 0, 1, or between 0 and 1 may be assigned to a relationship that affects specific variables and input as prior knowledge data. It is understood that the reliability or probability of prior knowledge data is not necessarily evaluated only with a specific value, and that there may be various forms of evaluation parameters that can evaluate the level.

On still another hand, data that can be input into a causality derivation algorithm may also include AI interpretation data, which is an interpretation result of causalities calculated by generative AI. The generative AI may independently analyze a causality between variables by referring to given process data and correlation derivation results, and in this phase, an interpretation result of the causality may be generated as AI interpretation data. The AI interpretation data may be generated by the generative AI support system 200 by referring to expertise data in a previously stored literature DB, and in this case, the AI interpretation data may be understood as a type of literature-based data.

Meanwhile, the causality derivation unit 110 may receive the AI interpretation data as an input again and use it as a reference to derive (or re-derive) a causality, thereby allowing exploration of a causality that is difficult for a person to intuitively understand, that is, a potential causality. The AI interpretation data may be generated by already allowing the generative AI to perform causality analysis from the time process data and experimental data are input, and the AI interpretation data may be utilized as an input from an initial step when the causality derivation unit 110 executes a causality derivation algorithm. On still another hand, a causality derivation result obtained by executing a causality derivation algorithm by the causality derivation unit 110 may also be implemented to be input again to the causality derivation unit 110 (S103-1). In this case, the causality derivation result may be stored in a literature DB and then processed so as to be retrieved by the causality derivation unit 110, or the causality derivation result may be directly reinput as an input to the causality derivation unit 110, thereby allowing a causality derivation algorithm to be repeatedly executed so as to derive a more accurate causality. For example, when generative AI generates an answer such as [Causality: Oxygen concentration affects a pH change; Basis: Oxygen concentration in the fermentation process affects aerobic metabolism and anaerobic metabolism of microorganisms, which in turn affects the production of metabolites and the pH change] in response to a prompt input requesting a relationship between a key variable affecting a productivity and the productivity, the causality in the answer generated in this way may be input again to the causality derivation unit 110 to help re-derive the causality.

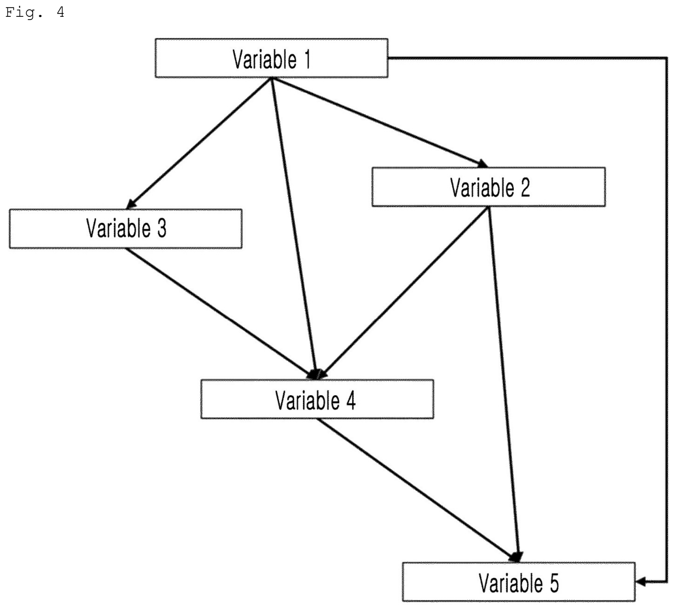

FIG. 4 shows an example of a graph in which a causality derivation result is visually expressed. When referring to the drawing, a causality derivation result may be displayed with causality arrows indicating which variable affects which other variables, and a location of each variable may be arranged to indicate a specific step in a process. Meanwhile, a vertical axis on a graph where each variable is arranged may represent a time axis, and may represent a variable in a process that proceeds later from the top to the bottom based on the vertical axis. Meanwhile, variables for which no causality with other variables has been found may be additionally arranged on the graph, but arrows indicating causalities will not be connected for those variables.

Turning to a specific example of the causality derivation result, a causality that a concentration of phosphate in a main step of a process may affect an amount of total sugar, a causality that an amount of total sugar in a main step may affect a product concentration in the main step, and a causality that a product concentration in a main step may affect a yield of a final product may be visually displayed.

Meanwhile, the foregoing causality derivation result may be input into the generative AI support system 200 to generate and provide a literature-based explanation for the corresponding result from the generative AI. For example, for a causality that a phosphate concentration in a main step can affect a total sugar amount, a supporting evidence such as "Phosphate is an essential element for energy metabolism such as ATP synthesis. When a phosphate concentration is sufficient, microorganisms may metabolize sugar more efficiently, which can increase a total sugar amount. In addition, phosphate can act as an important regulatory factor for enzyme activation." may be provided from generative AI, and furthermore, the supporting evidence may be accompanied by a source indicating that it is supported by "studies on the interaction between phosphate metabolism and sugar metabolism." That is, an output (a causality derivation result) generated by the causality derivation unit 110 may be input into the generative AI support system 200 and utilized to generate information on the supporting evidence and source of the causality, and such information on the supporting evidence and source may also be provided to the user to help understand or determine variables suitable for process optimization.

Referring again to FIG. 3, a causality derivation result calculated from the causality derivation unit 110 may be transmitted to the causality inference unit 120 (S103), and herein, a causality inference computation (S104) may be performed. Specifically, the causality inference unit 120 may receive the previously generated causality derivation result as an input to perform a function of quantitatively evaluating a strength of a relationship between each variable. In addition to the causality derivation result, prior knowledge data and/or AI interpretation data (literature-based data) generated by generative AI may be further input into the causality inference unit 120, and a strength of the causality between variables may be calculated with reference thereto. In the causality inference, a strength of a causality may be obtained by utilizing a statistical inference model, or by modeling a conditional probability distribution between variables by utilizing a probability-based inference model.

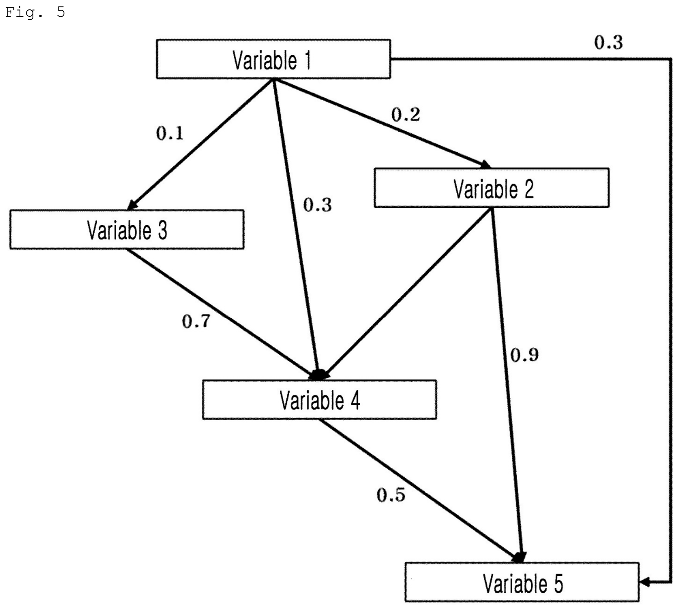

FIG. 5 is a graph visually showing a causality inference result. When referring to the drawing, it can be seen that a causality inference result is further described with values indicating a strength of a causality between variables on a graph that has previously been shown as a causality derivation result. In light of this result, the causality derivation unit 110 and the causality inference unit 120 may also be implemented as a single combined configuration.

Meanwhile, the causality inference result calculated from the causality inference unit 120 may be transmitted to the simulation unit 130 (S105), and the simulation unit 130 may be implemented to simulate a process phase with reference to the analyzed causalities (S106) and predict the result.

The data input to the simulation unit 130 may further include simulation condition information in addition to a causality inference result (including information on a causality and a causality strength) previously transmitted from the causality inference unit 120. For example, an instruction indicating which variable is changed and how to execute a simulation, such as changing variable 1 from 10 to 20 to execute a simulation, or changing variable 2 from 20 to 30 to execute a simulation, may be further included. The simulation condition information may be input by a user (person) or may be automatically generated internally by the process optimization system 10. In the latter case, the process optimization system 10 may arbitrarily determine a variable requiring a change in value and a degree of change in the value based on the causality inference result, and may be implemented to generate the determined variable and the degree of change in the value as simulation condition information. In this phase, in the process optimization system 10, the generative AI support system 200 may be an entity that generates simulation condition information. That is, simulation condition information may be automatically generated by allowing generative AI to determine a variable and a degree of change in value that are suitable for verifying the causality inference result.

The data output by the simulation unit 130 may include an expected result when the variable value is changed according to the previously input data, and may include a result such as, an increase by 5% in variable 3 (yield) when variable 1 is changed from 10 to 20, or a decrease by 3% in variable 3 (yield) when variable 2 is changed from 20 to 30.

Meanwhile, a result calculated by the simulation unit 130, that is, a simulation result, may be input into the generative AI support system 200 and utilized by the generative AI to generate literature-based data. The generative AI may generate text and provide the user with information such as which literature the simulation result is derived based on, whether the simulation result is valid when based on multiple literatures, and whether there are variables to be further considered when running the simulation, and the like.

Meanwhile, the simulation result calculated by the simulation unit 130 may be transmitted to the hypothesis generation unit 140 (S107), and the hypothesis generation unit 140 may perform a hypothesis generation computation (S108) based thereon.

The hypothesis generation unit 140 may specify a causality that is likely to improve a process and an effect thereof by referring to the information obtained from the simulation result, and may generate the specified causality as a hypothesis that allows process optimization. A predetermined computation formula may be utilized to determine whether a specific causality has the potential to improve a process, and in this computation formula, at least one of a value for evaluating the validity of the causality, a value for evaluating the possibility that process improvement is to be induced when the causality occurs validly, and a value for evaluating a process improvement rate may be utilized as a factor. Meanwhile, the hypothesis generated by the hypothesis generation unit 140 is preferably generated based on at least one of a previously unknown variable or a relationship between variables that has not been confirmed so far. If necessary, the hypothesis generation unit 140 may request verification of a plurality of candidate hypotheses from the generative AI support system 200, and in this phase, the generative AI may determine whether each hypothesis has previously been known and whether it includes a previously known causality by retrieving the literature DB to generate and provide the result as text. That is, the hypothesis generation unit 140 may receive AI interpretation data for at least one hypothesis from the generative AI support system 200.

In the above, a process optimization method according to a first embodiment according to the present disclosure has been examined with reference to FIG. 3.

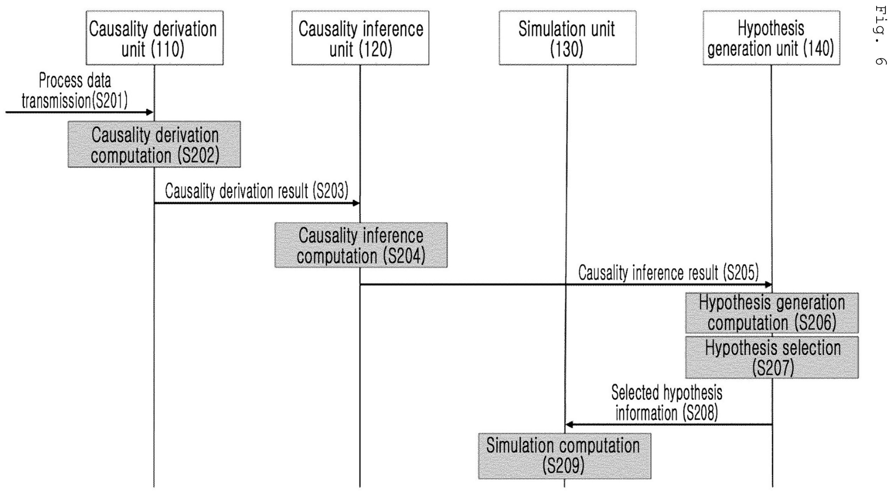

FIG. 6 sequentially shows a process optimization method according to a second embodiment of the present disclosure.

Referring to the drawing, the second embodiment differs from the first embodiment in that a causality inference result is transmitted (S205) by the causality inference unit 120 to the hypothesis generation unit 140 rather than the simulation unit 130, and the previous steps are substantially the same as the first embodiment.

In the second embodiment, subsequent to receiving, by the hypothesis generation unit 140, the causality inference result, a hypothesis generation computation may first be performed (S206), and the selecting of a hypothesis requiring a simulation (S207) may be performed. Step S207 may be performed by the user directly reviewing the generated hypotheses and then inputting a selection of a specific hypothesis (or hypotheses), or may be implemented so as to allow a specific hypothesis (hypotheses) to be selected by the generative AI verifying or evaluating the generated hypotheses with reference to the literature DB.

Meanwhile, subsequent to selecting a hypothesis, information on the selected hypothesis(es) may be transmitted to the simulation unit 130 (S208) to perform a simulation computation (S209).

Although the subsequent steps are not shown separately, a simulation result generated by the simulation computation may be processed into one final hypothesis for process optimization by itself and provided to the user, or the validity of the hypothesis may be re-evaluated by performing a separate verification (preferably verification by generative AI) on the simulation result.

In the above, a process optimization method according to the present disclosure and a system for the same have been described. Meanwhile, the present disclosure is not limited to the foregoing specific embodiments and application examples, it will be of course understood by those skilled in the art that various modifications may be made without departing from the gist of the present disclosure as defined in the following claims, and it is to be noted that those modifications should not be understood individually from the technical concept and prospect of the present disclosure.

### DESCRIPTION OF SYMBOLS

- 10: Process optimization system
- 100: Process optimization computation system
- 200: Generative AI support system

## Claims

1. A method of performing process optimization by a process optimization system including a central processing unit and a memory, the method comprising:
(a) a process data receiving step of receiving a plurality of process data;
(b) a causality derivation step of to deriving a causality between variables by analyzing the process data;
(c) a causality inference step of calculating a strength of a causality between the variables by referring to the derived causality;
(d) a simulation step of performing a simulation that changes a condition of a specific variable by referring to a causality inference result calculated in the causality inference step; and
(e) a hypothesis generation step of generating at least one hypothesis for process optimization by referring to a simulation result calculated in the simulation step.

2. The method of claim 1, wherein the causality derivation step comprises:
exploring the process data to identify characteristics or patterns of the process data;
deriving a correlation between arbitrary variables included in the process data;
selecting a key variable among the arbitrary variables; and
deriving a causality between variables based on the key variable.

3. The method of claim 1, wherein the causality derivation step further comprises:
inputting a causality derivation result generated by executing the causality derivation step into a generative AI support system; and
receiving AI interpretation data corresponding to the causality derivation result generated by the generative AI support system.

4. The method of claim 3, wherein the causality derivation step further comprises:
analyzing the received process data and the AI interpretation data to re-derive a causality between the variables.

5. The method of claim 4, wherein the AI interpretation data comprises a causality explanation generated by referring to the contents of previously stored literature and a source regarding the literature.

6. The method of claim 1, wherein the causality derivation step derives the causality by further inputting at least one experimental data or prior knowledge data in addition to the process data.

7. The method of claim 2, wherein the exploring of the process data explores by linking a final indicator targeted by process optimization with an arbitrary variable among the process data.

8. The method of claim 1, wherein the causality inference step comprises:
inputting a causality inference result generated by executing the causality inference step into a generative AI support system; and
receiving AI interpretation data corresponding to the causality inference result generated by the generative AI support system.

9. The method of claim 8, wherein the causality inference step further comprises:
analyzing the received causality derivation result and the AI interpretation data to recalculate a strength between the causalities.

10. The method of claim 1, wherein the simulation step performs a simulation by referring to a causality and a causality strength between specific variables included in the causality inference result, and also referring to simulation condition information arbitrarily generated by the process optimization system or input by an arbitrary user.

11. The method of claim 1, wherein the hypothesis generation step generates a hypothesis including a specific causality and an effect according to the causality by referring to the simulation result, and determines whether the hypothesis includes a previously known causality by retrieving a literature DB.

12. The method of claim 11, wherein the hypothesis generation step comprises:
inputting at least one hypothesis generated by executing the hypothesis generation step into a generative AI support system; and
receiving AI interpretation data corresponding to the hypothesis generated by the generative AI support system.

13. A method of performing process optimization by a process optimization system including a central processing unit and a memory, the method comprising:
(a) a process data receiving step of receiving a plurality of process data;
(b) a causality derivation step of to deriving a causality between variables by analyzing the process data;
(c) a causality inference step of calculating a strength of a causality between the variables by referring to the derived causality;
(d) a hypothesis generation step of generating at least one hypothesis for process optimization by referring to a causality inference result produced in the causality inference step; and
(e) a simulation step of performing a simulation that changes a condition of a specific variable by referring to information on the hypothesis.

14. The method of claim 13, further comprising:
selecting, when a plurality of hypotheses are generated in the hypothesis generation step, hypotheses requiring a simulation subsequent to the hypothesis generation step, wherein the simulation step performs a simulation only for the selected hypotheses.

15. A process optimization system comprising a central processing unit and a memory, wherein the central processing unit executes instructions for executing a process optimization method stored in the memory, and
wherein a method of executing the process optimization method comprises:
(a) a process data receiving step of receiving a plurality of process data;
(b) a causality derivation step of to deriving a causality between variables by analyzing the process data;
(c) a causality inference step of calculating a strength of a causality between the variables by referring to the derived causality;
(d) a simulation step of performing a simulation that changes a condition of a specific variable by referring to a causality inference result calculated in the causality inference step; and
(e) a hypothesis generation step of generating at least one hypothesis for process optimization by referring to a simulation result calculated in the simulation step.

16. A process optimization system comprising a central processing unit and a memory, wherein the central processing unit executes instructions for executing a process optimization method stored in the memory, and
wherein a method of executing the process optimization method comprises:
(a) a process data receiving step of receiving a plurality of process data;
(b) a causality derivation step of to deriving a causality between variables by analyzing the process data;
(c) a causality inference step of calculating a strength of a causality between the variables by referring to the derived causality;
(d) a hypothesis generation step of generating at least one hypothesis for process optimization by referring to a causality inference result produced in the causality inference step; and
(e) a simulation step of performing a simulation to change a condition of a specific variable by referring to information on the hypothesis.
